# EUROPEAN PATENT APPLICATION

(11) **EP 2 243 759 A1**
(43) Date of publication of application: **27.10.2010**
(21) Application number: 10157174.3
(22) Date of filing: 22.03.2010
(51) Int. Cl.: C04B 37/00

(54) **Process for joining silicon-containing ceramic articles and components produced thereby**

(30) Priority: 27.03.2009 US 412409
(71) Applicant: General Electric Company, Schenectady, NY 12345 (US)
(72) Inventor: Corman, Gregory Scot, Ballston Lake, NY 12019 (US)
(74) Representative: Szary, Anne Catherine

(57) **Abstract**

A process for joining silicon-containing ceramic articles (12), and particularly ceramic articles (12) and CMC articles (12) that contain both silicon carbide and free silicon. The process entails providing a reactive metal-containing braze material (20) between the articles (12), and then heating the braze material (20) and the articles (12) to react the reactive metal with the silicon within the articles (12) to form a brazement (24) containing a silicide phase of the reactive metal. The brazement (24) and articles (12) are then cooled to produce a component (10) comprising the two articles (12) and the silicide phase-containing brazement (24). The process is preferably carried out at temperatures below that which would thermally degrade constituents of the articles (12), and more preferably below the melting point of silicon.

## Description

### BACKGROUND OF THE INVENTION

The present invention generally relates to ceramic articles and processes for their production. More particularly, this invention is directed to a process of joining silicon-containing ceramic articles that avoids degradation of the ceramic material and its properties.

Higher operating temperatures for gas turbine engines are continuously sought in order to increase their efficiency. Though significant advances in high temperature capabilities have been achieved through formulation of iron, nickel and cobalt-base superalloys, alternative materials have been investigated. Ceramic materials and ceramic matrix composite (CMC) materials are notable examples because their high temperature capabilities can significantly reduce cooling air requirements. Ceramic materials may have a monolithic ceramic composition, whereas CMC materials generally comprise a ceramic fiber reinforcement material embedded in a ceramic matrix material. The reinforcement material may be discontinuous short fibers dispersed in the matrix material or continuous fibers or fiber bundles oriented within the matrix material, and serves as the load-bearing constituent of the CMC in the event of a matrix crack. In turn, the ceramic matrix protects the reinforcement material, maintains the orientation of its fibers, and serves to dissipate loads to the reinforcement material. Individual fibers (filaments) are often coated with a release agent, such as boron nitride (BN) or carbon, to form a weak interface or de-bond coating that allows for limited and controlled slip between the fibers and the ceramic matrix material. As cracks develop in the CMC, one or more fibers bridging the crack act to redistribute the load to adjacent fibers and regions of the matrix material, thus inhibiting or at least slowing further propagation of the crack.

Continuous fiber reinforced ceramic composites (CFCC) are a type of CMC that offers light weight, high strength, and high stiffness for a variety of high temperature load-bearing applications, including shrouds, combustor liners, nozzles, and other high-temperature components of gas turbine engines. A CFCC material is generally characterized by continuous fibers (filaments) that may be arranged to form a unidirectional array of fibers, or bundled in tows that are arranged to form a unidirectional array of tows, or bundled in tows that are woven to form a two-dimensional fabric or woven or braided to form a three-dimensional fabric. For three-dimensional fabrics, sets of unidirectional tows may, for example, be interwoven transverse to each other. As with CMCs reinforced with individual fibers, individual tows of a CFCC material can be coated with a release agent to form a de-bond coating that inhibits crack propagation.

Of particular interest to high-temperature applications are silicon-based ceramic materials, and particularly CMCs that contain silicon carbide (SiC) as the matrix and/or reinforcement material. A notable example of a CFCC has been developed by the General Electric Company under the name HiPerComp®, and contains continuous silicon carbide fibers in a matrix of silicon carbide and elemental silicon (which as used herein refers to free silicon that is not in the form of a compound). Notable silicon carbide fiber materials include NICALON®, HI-NICALON®, and HI-NICALON® Type S fibers commercially available from Nippon Carbon Co., Ltd., and the Tyranno family of fibers available from UBE Industries, Ltd.

Examples of processes for producing Si-SiC ceramic materials include reaction-bonded silicon carbide, also known as Silcomp in the literature. The Silcomp process entails melt infiltration (MI) of silicon into a porous preform containing carbon and/or silicon carbide. During infiltration the silicon reacts with the carbon in the preform, yielding two interpenetrating, continuous networks of silicon carbide and residual silicon. Examples of SiC/Si-SiC (fiber/matrix) CMC materials and processes are disclosed in commonly-assigned U.S. Patent Nos. 5,015,540, 5,330,854, 5,336,350, 5,628,938, 6,024,898, 6,258,737, 6,403,158, and 6,503,441, and commonly-assigned U.S. Patent Application Publication No. 2004/0067316. One such process is known as "prepreg" melt-infiltration, which in general terms entails the fabrication of CMCs using multiple prepreg layers, each in the form of a tape-like structure comprising the desired reinforcement material, a precursor of the CMC matrix material, carbon or a carbon source, and one or more binders. An organic binder can be used as the carbon source. The prepreg must undergo processing (including firing) to convert the precursor to the desired ceramic, during which the binder decomposes and a porous preform is produced ready for melt infiltration. Further heating, either as part of the same heat cycle as the binder burn-out step or in an independent subsequent heating step, the preform is melt infiltrated, such as with molten silicon supplied externally. The molten silicon infiltrates into the porosity, reacts with the carbon constituent (carbon, carbon source, or carbon char) of the matrix to form silicon carbide, and fills the porosity to yield the desired CMC component.

While components having a variety of shapes can be produced from monolithic ceramic and CMC materials, certain components benefit or require fabrication using multiple sub-components. While mechanical assemblies may suffice for certain applications, metallurgical joining is preferred for others. Joining of SiC-Si bodies has typically been done by either re-heating the bodies above the melting point of silicon to form a silicon joint, or by introducing carbon into the joint region prior to heating and reacting the available silicon to form additional silicon carbide at the joint. Unfortunately, silicon joints are generally weak, and silicon-carbon reaction joints require heating the bodies above the melting point of silicon. In SiC-Si and SiC/Si-SiC CMC bodies, heating above the melting point of silicon can lead to mechanical degradation of the bodies. For example, in SiC/Si-SiC CMC bodies reactions can occur between the molten silicon and the SiC reinforcing fibers and/or fiber coatings. Consequently, processes have been investigated for producing bond joints at temperatures below the melting temperature of silicon (about 1405°C). As an example, U.S. Patent No. 5,139,594 to Rabin discloses a process for bonding SiC/SiC articles through an exothermic reaction utilizing a reaction mixture consisting of a nickel powder and a stoichiometric mixture of titanium and carbon powder to form a titanium carbide-nickel joining material. Stoichiometric mixtures of molybdenum and silicon are also disclosed as being suitable.

### BRIEF DESCRIPTION OF THE INVENTION

The present invention provides a process for joining silicon-containing ceramic articles, and particularly ceramic articles and CMC articles that contain both silicon carbide and free silicon. The process is preferably carried out at temperatures below that which would thermally degrade the silicon carbide content of the articles, and more preferably below the melting point of silicon.

According to a first aspect of the invention, the process entails providing a reactive metal-containing braze material between the articles, and then heating the braze material and the articles to react the reactive metal with the silicon within the articles to form a brazement containing a silicide phase of the reactive metal. The brazement and articles are then cooled to produce a component comprising the two articles and the silicide phase-containing brazement.

Another aspect of the invention is the component produced by the process described above. Nonlimiting examples include blades (buckets), vanes (nozzles), shrouds, combustor liners, and other high-temperature components of gas turbine engines.

A significant advantage of this invention is the ability to produce SiC-Si ceramic and SiC/Si-SiC (fiber/matrix) CMC (including CFCC) components having relatively complex shapes that are otherwise difficult to produce as a single unitary piece.

The articles can be produced to have relatively uncomplicated shapes, and then effectively joined by a process that does not degrade the overall temperature capability of the resulting component. As such, fabrication costs can be minimized without compromising the structural integrity of the individual articles from which the component was produced.

Other aspects and advantages of this invention will be better appreciated from the following detailed description.

### BRIEF DESCRIPTION OF THE DRAWINGS

FIG. 1 schematically represents a fragmentary cross-sectional view of a braze foil between two CFCC articles in preparation for brazing the articles with the braze foil.
FIG. 2 schematically represents a fragmentary cross-sectional view of a component formed by heating the braze foil and articles represented in FIG. 1.

### DETAILED DESCRIPTION OF THE INVENTION

The present invention will be described in terms of processes for producing components by joining ceramic articles and/or CMC articles (including CFCC articles) that contain silicon carbide and free silicon as monolithic compositions or matrix materials of the articles. CMC materials of particular interest to the invention are those containing silicon carbide as the reinforcement material, a particular example of which is continuous silicon carbide fibers in a matrix of silicon carbide and silicon. However, other silicon-containing ceramic materials are also believed to be within the scope of the invention. While various applications are foreseeable, particular applications include components of gas turbine engines, such as blades (buckets), vanes (nozzles), shrouds, combustor liners, and other high-temperature components within the hot gas path of a gas turbine engine.

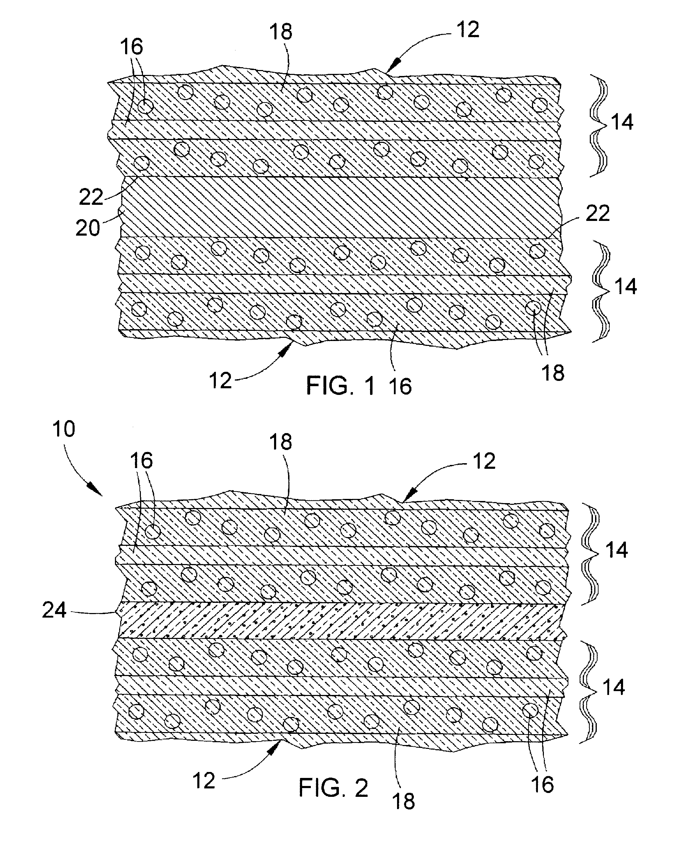

FIG. 1 schematically represents a pair of CMC articles 12 that are represented as being formed of CFCC materials. Each article 12 comprises multiple laminae 14, each derived from an individual prepreg that originally comprised unidirectionally-aligned tows 16 impregnated with a ceramic matrix precursor. As a result of debulking, curing and firing the laminate preform formed by the stacked prepregs, the tows 16 are encased in a matrix 18 that includes a silicon carbide phase formed by conversion of the ceramic matrix precursor during firing and melt infiltration with silicon. As a result of the melt infiltration process, the matrix 18 also contains a free silicon phase, which can be in the form of elemental silicon or a silicon alloy, for example, a silicon-boron alloy.

As CFCC articles 12, the tows 16 are preferably unidirectional in each lamina 14, i.e., oriented side-by-side and parallel to each other. Suitable fiber diameters, tow diameters and center-to-center tow spacings will depend on the particular application, the thicknesses of the laminae 14, and other factors, and therefore are not represented to scale in FIG. 1. According to known practice, individual fibers (not shown) of the tows 16 can be coated with a release agent, such as boron nitride (BN) or carbon, to form a de-bond coating (not shown) that allows for limited and controlled slip between the matrix 18 and the tows 16 and their individual fibers, which has the desirable effect of inhibiting or at least slowing the propagation of cracks through the articles 12.

While the invention will be described in reference to the CMC architecture represented in FIG. 1, it should be understood that the invention is also applicable to other CMC architectures, as well as articles formed of monolithic ceramic materials containing silicon carbide and silicon. Furthermore, the articles 12 can be fabricated using processes other than those described herein.

According to a particular aspect of the invention, the articles 12 are joined by providing a braze material 20 disposed between the articles 12 and contacting the facing surfaces 22 of the articles 12. Though shown in FIG. 1 as parallel to the laminae 14, the braze material 20 and the resulting brazement 24 (FIG. 2) can have any orientation to the laminae 14, and therefore are not limited to the orientation shown in the drawings. The braze material 20 may be in the form of a foil placed between the articles 12, or a metallization deposited on one or both surfaces 22 of the articles 12, or some other suitable form. The braze material 20 contains at least one reactive metal capable of reacting with the free silicon already present in the articles 12, as opposed to silicon present in the braze material 20, to form a refractory silicide phase that serves as the joining material for the resulting brazement 24 of a component 10 represented in FIG. 2. The braze material 20 preferably contains the reactive metal as its predominant constituent (the braze material 20 contains more of the reactive metal than any other constituent), and more preferably contains only the reactive metal and incidental impurities. Preferably absent from the braze material 20 are carbon and silicon, which have been employed in prior art joining and brazing technologies applied to SiC-containing ceramic materials. However, carbon and silicon are limited to impurity levels (for example, less than one weight percent each).

A preferred reactive metal is believed to be molybdenum, though other reactive metals may also be suitable in addition to or in place of molybdenum, such as tungsten, niobium, tantalum, titanium, vanadium, cobalt, chromium, hafnium, yttrium, zirconium and boron. Of these, tungsten, niobium and tantalum are believed to be preferred and molybdenum most preferred. Molybdenum offers desirable characteristics, including a silicide (MoSi₂) that exhibits oxidation resistance similar to the silicon carbide in the articles 12, and the Mo-Si eutectic has a melting temperature that is only slightly below the melting point of silicon. As a result, the use of molybdenum as the reactive metal results in the formation of an oxidation-resistant molybdenum silicide phase capable of forming at temperatures below the melting temperature of silicon. Depending on the thickness of the braze material 20 and diffusivity of the reactive metal and silicon in the desired silicide phase, at elevated temperatures sufficient to induce solid-state diffusion (for example, about 1200°C to about 1390°C), silicon will diffuse from the articles 12 into the braze material 20 and react with the molybdenum in the braze material 20 to form the molybdenum silicide phase. For a solid-state diffusion, a thickness of about 1 to about 50 micrometers is believed to be suitable for the braze material 20. At higher temperatures (for example, about 1395°C to about 1405°C), the silicon in the articles 12 and the molybdenum in the braze material 20 form a eutectic melt from which the molybdenum silicide phase forms. A suitable thickness for the braze material 20 is believed to be about 5 to about 100 micrometers for this reaction process. Alternatively, the articles 12 and braze material 20 can be heated to a temperature above the melting point of silicon (for example, about 1600°C) for a time sufficient to cause some of the silicon near the article surfaces 22 to melt and react with the braze material 20.

In an investigation leading to the present invention, reaction-bonded SiC-Si samples (corresponding in composition to matrix materials used to form melt-infiltrated SiC/SiC-Si CMCs) were prepared and surface polished. Molybdenum foils having thicknesses of about 0.0005 inch (about 13 micrometers) were individually placed between pairs of the SiC-Si samples. The assemblies were then clamped together using a graphite clamp and heated to a temperature of either about 1300°C or about 1425°C (below and above, respectively, the melting point of silicon within the SiC-Si samples) for about one hour in a vacuum furnace. After cooling, the pairs of SiC-Si samples were bonded together, experimentally demonstrating the feasibility of the process. Examination of the resulting braze joints by scanning electron microscopy and energy dispersive analysis of x-rays showed the brazements to be converted to molybdenum silicide. The brazement formed at about 1300°C still had remnant molybdenum metal irregularly spaced along the center of the braze foil, indicating that a somewhat longer heating time or somewhat higher heating temperature would be desired when using an approximately 13 micrometer-thick foil at about 1300°C. The brazement formed at 1425°C was fully converted to molybdenum silicide.

From the above, it was concluded that the process was capable of producing components from articles formed of SiC-Si ceramic materials, including monolithic and CMC ceramic materials. The investigation further evidenced that these components can be produced using a joining process that does not degrade the overall temperature capability of the component if carried out for appropriate durations at temperatures near or below the melting temperature of silicon.

While the invention has been described in terms of specific embodiments, it is apparent that other forms could be adopted by one skilled in the art. Therefore, the scope of the invention is to be limited only by the following claims.

## Claims

1. A process for joining at least two articles formed of ceramic materials containing silicon carbide and silicon, the process comprising:
providing a braze material between the articles, the braze material containing at least one reactive metal;
heating the braze material and the articles to react the reactive metal with the silicon in the articles to form a brazement containing a silicide phase of the reactive metal; and then
cooling the brazement and the articles to produce a component comprising the two articles and the brazement.

2. The process according to claim 1, wherein the braze material is a metallic film placed between the two articles.

3. The process according to claim 1 or claim 2, wherein the reactive metal is at least one element chosen from the group consisting of molybdenum, tungsten, niobium, tantalum, titanium, vanadium, cobalt, chromium, hafnium, yttrium, zirconium and boron.

4. The process according to any preceding claim, wherein the reactive metal is molybdenum and the silicide phase is molybdenum silicide.

5. The process according to any preceding claim, wherein the braze material contains more molybdenum than any other constituent of the braze material, and preferably the braze material consists of molybdenum and incidental impurities.

6. The process according to any preceding claim, wherein the brazement does not contain silicon carbide.

7. The process according to any preceding claim, wherein the heating step is a solid-state diffusion process.

8. The process according to any preceding claim, wherein the heating step comprises heating the articles and the braze material to a temperature above a melting temperature of a eutectic composition of silicon and the reactive metal.

9. The process according to any preceding claim, wherein the temperature to which the articles and the braze material are heated is less than the melting temperature of silicon.

10. The process according to any preceding claim, wherein the articles and the braze material are heated to a temperature of about 1200°C to about 1600°C.

11. The process according to any preceding claim, wherein the ceramic material of at least one of the two articles is a ceramic matrix composite material comprising silicon carbide reinforcement fibers in a matrix comprising silicon carbide and silicon.

12. A process of forming a component of a gas turbine engine by joining at least two articles formed of ceramic materials containing silicon carbide and silicon, the process comprising:
providing a braze material between the articles, the braze material consisting essentially of molybdenum;
heating the braze material and the articles to react the molybdenum in the braze material with the silicon in the articles to form a brazement containing a molybdenum silicide phase; and then
cooling the brazement and the articles to produce the component comprising the two articles and the brazement.

13. The process according to claim 12, wherein the braze material consists of molybdenum and incidental impurities and the brazement does not contain silicon carbide.

14. The process according to claim 12 or claim 13, wherein the heating step is a solid state diffusion process and comprises heating the articles and the braze material to a temperature above a melting temperate of a eutectic composition of silicon and molybdenum and less than the melting temperate of silicon.

15. The process according to any one of claims 12 to 14, wherein the ceramic material of at least one of the two articles is a ceramic matrix composite material comprising silicon carbide reinforcement fibers in a matrix comprising silicon carbide and silicon.
